Europäisches Patentamt

European Patent Office

Office européen des brevets

(19)

(11) Veröffentlichungsnummer: **0 027 503**
A1

(12) **EUROPÄISCHE PATENTANMELDUNG**

(21) Anmeldenummer: **80104408.2**

(22) Anmeldetag: **26.07.80**

(51) Int. Cl.³: **F 24 J 3/02**

(30) Priorität: **13.10.79 DE 2941609**

(43) Veröffentlichungstag der Anmeldung:
**29.04.81** Patentblatt **81/17**

(84) Benannte Vertragsstaaten:
AT BE CH FR GB IT LI NL SE

(71) Anmelder: **Kabel- und Metallwerke**
**Gutehoffnungshütte Aktiengesellschaft**
**Kabelkamp 20 Postfach 260**
**D-3000 Hannover 1(DE)**

(72) Erfinder: **Schimmelpfennig, Klaus, Dipl.-Ing.**
**Am Hohen Holze 20**
**D-3008 Garbsen 1(DE)**

(72) Erfinder: **Bogdanski, Franz, Dr.**
**Buchenkamp 2**
**D-3214 Völksen(DE)**

(54) **Metallplatte oder -bahn zur Aufnahme von Wärmeenergie aus der Umluft.**

㊵ Diese Metallplatte (1) ist mittels geeigneter Halterungen im Abstand zu einer bestehenden Dachhaut bzw. Fassade befestigt und weist ein Kanalsystem (2) zur Führung eines Wärmeenergie aus der Umluft aufnehmenden Arbeitsmediums auf.

Zwecks Erhöhung der Wärmeaufnahme und zur Nachrüstung von Altbauten weist die Platte (1) mindestens zwei parallel und in Richtung der Dachneigung verlaufende nahtlos ausgebildete Kanäle (2) auf. Der zwischen jeweils zwei Kanälen (2) einer Platte (1) gelegene Bereich weist Trennschnitte auf und die durch die Trennschnitte entstandenen Bereiche sind aus der Ebene der Platte (1) herausgeformt, wobei die Ausformungen (4,5) in wechselnder Folge zum Gebäude hin und von diesem weg gerichtet sind.

./...

K a b e l - u n d M e t a l l w e r k e
Gutehoffnungshütte Aktiengesellschaft

1-1702

12.10.79

Metallplatte oder -bahn zur Aufnahme von Wärmeenergie aus
der Umluft

Die Erfindung betrifft eine Metallplatte oder -bahn, welche
mittels geeigneter Halterungen im Abstand zu einer bestehenden Dachhaut bzw. an einer Fassade befestigt ist und
ein Kanalsystem zur Führung eines Wärmeenergie aus der Umluft aufnehmenden Arbeitsmediums aufweist.

Zur Aufnahme von Sonnenenergie sind sogenannte Solarkollektoren bekannt, welche mittels geeigneter Halterungen auf
einer bestehenden Dachhaut, beispielsweise einer Ziegeleindeckung, befestigt sind. Diese Solarkollektoren sind
üblicherweise aus zwei Metallplatten durch Kaltverschweißen
hergestellt, wobei beim Kaltverschweißen ein meistens
mäanderförmig verlaufendes Kanalsystem erzeugt wird. Zur
Verbesserung der Wärmeausnutzung tragen diese Solarkollektoren an ihrer nach außen weisenden Oberfläche eine Schicht
aus einem durchsichtigen Material, beispielsweise eine
Kunststoffabdeckung. Der Einsatz solcher Solarkollektoren
in Gegenden mit veränderlichem Klima, wie beispielsweise
Mitteleuropa, erscheint wenig sinnvoll, da die Wirtschaftlichkeit solcher Anlagen wegen der relativ wenigen wolkenfreien Tagen in Frage gestellt werden muß. Wegen der wechselhaften Witterung ist in Mitteleuropa ein relativ großer Speicher unumgänglich.

Wesentlich wirtschaftlicher erscheint daher die Beheizung von Gebäuden mittels einer Wärmepumpenanlage, bei welcher die Umweltenergie aus der umgebenden Luft entnommen wird. In einer älteren Anmeldung (P 29 35 001) ist eine Dachabdeckung beschrieben, welche in hervorragender Weise geeignet ist, der Umluft Energie zu entziehen und diese Heizungszwecken zugänglich zu machen. Der dort beschriebene Vorschlag dient primär zur Eindeckung von Neubauten.

Der vorliegenden Erfindung liegt die Aufgabe zugrunde, eine Metallplatte oder Metallbahn anzugeben, die in besonders günstiger Weise geeignet ist, Energie aus der Umgebung aufzunehmen und nachträglich auf bereits bestehende Dächer aufgebaut werden kann. Diese Aufgabe wird bei einer Metallplatte oder Metallbahn der eingangs erwähnten Art dadurch gelöst, daß die Platte oder Bahn mindestens zwei im Abstand zueinander parallel verlaufende und im Falle eines Schrägdaches in Richtung der Dachneigung verlaufende Kanäle aufweist, die nahtlos ausgebildet sind und der zwischen jeweils zwei Kanälen einer Platte oder Bahn gelegene Bereich in Abständen Trennschnitte aufweist und die durch die Trennschnitte erzeugten Bereiche aus der Ebene herausgeformt sind, wobei die Ausformungen in wechselnder Folge zum Gebäude hin und von diesem weg gerichtet sind, bzw. lediglich jeder zweite Bereich vom Gebäude weg gerichtet ist. Dadurch, daß bei der Erfindung die Dichtigkeit der Dachfläche nicht berücksichtigt werden braucht, kann diese in Richtung auf die Wärmeaufnahme optimiert werden. Die Ausformungen ermöglichen dabei einen Austausch, der oberhalb und unterhalb der Metallplatte auftretenden Luftströmungen. Die Platte ist deshalb in hervorragender Weise geeignet, sowohl von der Unter- als auch von der Oberseite aus Energie aufzunehmen, wobei infolge der Verwirbelung der Luftströmungen der Wärmeübergang gegenüber den bekannten Konstruktionen wesentlich verbessert wird.

Nach einer besonders günstigen Ausgestaltung der Erfindung sind die Ausformungen gewölbt ausgebildet. Im Falle von Schrägdächern hat sich diese Ausführung auch als Schneefangkonstruktion als brauchbar erwiesen. Ein Herabrutschen von größeren Eisplatten ist nicht möglich. Nach einer anderen Ausführungsform ist vorgesehen, die Ausformungen durch Abkanten mit senkrecht zu den Kanälen verlaufenden Kanten zu erzeugen. Auch diese Ausführungsform verhindert die Bildung zusammenhängender Eisplatten. Mit besonderem Vorteil sind die Metallplatten oder -bahnen aus Kupferblech mit einer Wanddicke von 0,6 bis 1,2 mm hergestellt. Diese Wanddicken erlauben, daß das Dach noch begehbar ist. Die Auswahl des Werkstoffs Kupfer hat sowohl architektonische als auch physikalische Gründe. Aufgrund seiner hohen thermischen Leitfähigkeit wird durch geeignete Anordnung der Kanäle die gesamte Dachfläche zur Aufnahme von Wärmeenergie voll ausgenutzt. Insbesondere bei wechselhaftem Wetter erwärmt sich die Metallbahn oder -platte auch bei kurzen Sonnenscheinperioden sehr schnell. Da die Funktion der Dachdichtung, wie bereits erwähnt, nicht berücksichtigt werden muß, können die einzelnen Bahnen oder Platten nebeneinander auf dem Dach angeordnet sein und jede für sich befestigt werden. Es hat sich jedoch als vorteilhaft erwiesen, Platten zu verwenden, die an ihren Längskanten einen Stehfalz aufweisen und jeweils zwei benachbarte Platten oder Bahnen durch ein die Stehfalze umgreifendes Metallband gegeneinander zu fixieren. Dadurch entsteht ein kompaktes Gebilde auf dem Dach bzw. an der Fassade, welches infolge der Stehfalze auch mechanisch stabil ist. Mit besonderem Vorteil werden derartige Metallplatten oder -bahnen als Absorber und großflächiger Wärmetauscher eines mittels Wärmepumpe betriebenen Heizungsanlage verwendet.

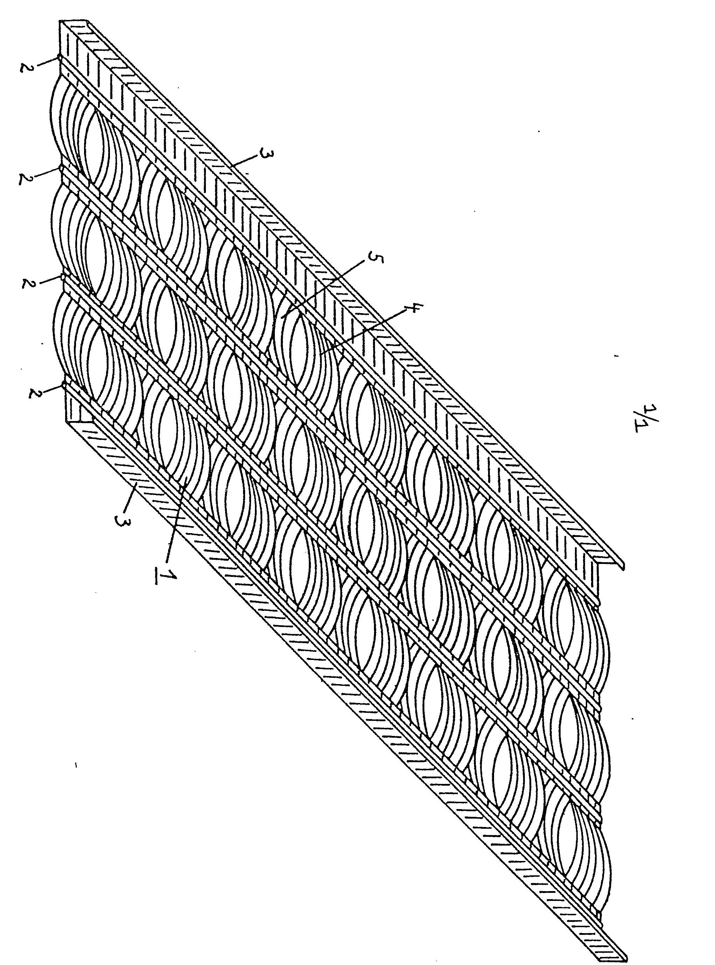

Die Erfindung ist anhand des in der Figur schematisch dargestellten Ausführungsbeispiels näher erläutert.

Die erfindungsgemäße Platte oder Bahn 1 weist in Längsrichtung verlaufende Kanäle 2 auf, welche zur Führung
eines Arbeitsmediums dienen. An den Längskanten der
Platte 1 sind sogenannte Stehfalze 3 angeordnet, mit
deren Hilfe zwei nebeneinanderliegende Platten 1 mittels
eines nicht dargestellten die Stehfalze 3 zweier benachbarten Platten 1 umgreifenden Bandes zusammengehalten werden. Zwischen jeweils zwei nebeneinanderlaufenden Kanälen
2 ist das Blechmaterial in vorbestimmten Abständen durchtrennt, wobei die Trennschnitte in vertikaler Richtung
zur Richtung der Kanäle 2 verlaufen. Der Bereich zwischen
jeweils zwei Trennschnitten wird in wechselnder Folge verformt, so daß einmal nach oben weisende Aufwölbungen 4 und
zu diesen benachbart nach unten weisende Aufwölbungen 5
entstehen. Durch die Aufwölbungen 4 und 5 kann ein Austausch zwischen den oberhalb und unterhalb der Platte 1
strömenden Luftschichten erfolgen, welcher den Wärmeübergang von der Luft auf die Platte 1 und das in den Kanälen
2 strömende Arbeitsmedium verbessert. Die nach oben weisenden Aufwölbungen 4 haben darüber hinaus noch den Zweck,
daß sie als sogenannte Schneefanggitter dienen und ein
Heruntergleiten von durchgehenden Eisschichten vom Dach
verhindern. Die Platten oder Bahnen 1 gemäß der Lehre der
Erfindung können auf bereits bestehende Dacheindeckungen
in an sich bekannter Weise im Abstand zu diesen befestigt
werden. Die Länge der Platten oder Bahnen 1 sollte so bemessen sein, daß sie möglichst vom First bis zur Traufe
reichen, es ist aber auch durchaus möglich, vorkonfektionierte Bahnen oder Platten 1 begrenzter Länge ggf. mit
Überlappung aneinanderzureihen. Wesentlich ist, daß die Kanäle 2 einer Platte oder Bahn 1 in gleicher Richtung vom Arbeitsmedium durchströmt werden. Dadurch ist gewährleistet, daß das Arbeitsmedium, welches zweckmäßigerweise eine nicht gefrierende Flüssigkeit ist, in den Kanälen 2 einer Platte 1 eine gleiche Temperatur aufweist, wodurch ein thermischer Kurzschluß vermieden ist.

Die Kanäle 2 sind nahtlos ausgebildet, d.h. nach einem speziellen Verfahren hergestellt. Dieses Verfahren besteht darin, daß man in einen Metallblock, vorzugsweise aus Kupfer, durchgehende Bohrungen einbringt, vorzugsweise mittels Tiefbohren, in die Bohrungen ein Trennmittel einführt und die Metallblöcke in einem oder mehreren Walzstichen warm herunterwalzt. Bei diesem Warmwalzen werden die durch Tiefbohren erzeugten Bohrungen abgeflacht, wobei aber eine Materialtrennung vorhanden bleibt. Nach dem Warmwalzen werden die Oxidschichten abgefräst und in nachfolgenden Kaltwalzstichen wird das warmgewalzte Band auf das Endmaß heruntergewalzt. Das so vorbereitete Metallband wird dann zwischen den Kanälen 2 zu den Aufwölbungen 4 und 5 verformt und abschließend die Kanäle 2 durch Einführen von Preßluft aufgeblasen. Das Anformen der Stehfalze 3 kann unmittelbar vor oder nach dem Herstellen der Auswölbungen 4 und 5 geschehen. Die Platte oder Bahn 1 ist zweckmäßigerweise aus Kupfer mit einer Wanddicke zwischen 0,6 und 1,2 mm ausgebildet.

Ein aus mehreren Metallplatten oder -bahnen 1 gebildeter oberhalb einer normalen Dacheindeckung gelegener Absorber ist in hervorragender Weise geeignet, einer Wärmepumpenanlage zur Beheizung von Gebäuden die aus der Umgebung entnommene Energie zuzuführen.

Kabel- und Metallwerke
Gutehoffnungshütte Aktiengesellschaft

1-1702
12.10.79

Patentansprüche

1. Metallplatte oder -bahn, welche mittels geeigneter Halterungen im Abstand zu einer bestehenden Dachhaut bzw. an einer Fassade befestigt ist und ein Kanalsystem zur Führung eines Wärmeenergie aus der Umluft aufnehmenden Arbeitsmediums aufweist, dadurch gekennzeichnet, daß die Platte (1) mindestens zwei im Abstand zueinander parallel verlaufende und im Falle eines Schrägdaches in Richtung der Dachneigung verlaufende Kanäle (2) aufweist, die nahtlos ausgebildet sind und der zwischen jeweils zwei Kanälen (2) einer Platte (1) oder Bahn gelegene Bereich in Abständen Trennschnitte aufweist und die durch die Trennschnitte erzeugten Bereiche aus der Ebene herausgeformt sind, wobei die Ausformungen (4, 5) in wechselnder Folge zum Gebäude hin und von diesem weg gerichtet sind bzw. lediglich jeder zweite Bereich vom Gebäude weg gerichtet ist.

2. Metallplatte oder -bahn nach Anspruch 1, dadurch gekennzeichnet, daß die Ausformungen (4, 5) gewölbt ausgebildet sind.

BAD ORIGINAL

- 2 -

- 2 -    **0027503**

3. Metallplatte oder -bahn nach Anspruch 1, <u>dadurch ge-kennzeichnet</u>, daß die Ausformungen (4, 5) durch Abkanten mit senkrecht zu den Kanälen (2) verlaufenden Kanten erzeugt sind.

4. Metallplatte oder -bahn nach Anspruch 1 oder einem der folgenden, <u>dadurch gekennzeichnet</u>, daß die Metall-platte (1) oder -bahn aus Kupferblech mit einer Wanddicke von 0,6 bis 1,2 mm hergestellt ist.

5. Metallplatte oder -bahn nach Anspruch 1 oder einem der folgenden, <u>dadurch gekennzeichnet</u>, daß sie an ihren Längskanten einen Stehfalz (3) aufweist und daß zwei benachbarte Platten (1) oder Bahnen durch ein die Stehfalze (3) umgreifendes Metallband gegeneinander fixiert sind.

6. Metallplatte oder -bahn nach Anspruch 1 oder einem der folgenden, <u>dadurch gekennzeichnet</u>, daß zwischen den Stehfalzen (3) einer Platte (1) oder Bahn eine durchsichtige Platte, vorzugsweise aus Kunststoff, federnd eingeklemmt ist.

7. Verwendung einer oder mehrerer Metallplatten oder -bahnen nach Anspruch 1 oder einem der folgenden, als Absorber einer mittels Wärmepumpe betriebenen Heizungsanlage.

8. Metallplatte oder -bahn nach Anspruch 7, <u>dadurch ge-kennzeichnet</u>, daß die Kanäle (2) einer Platte (1) in gleicher Richtung vom Arbeitsmedium durchströmt sind.

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE – A1 – 2 833 122 (TORRENS RASAL)<br>* Seite 8, Absätze 2 und 3; Fig. 1, Position 4 und Fig. 7, Positionen 11 und 11'; Fig. 1, Positionen 1, 2 und 3 *<br><br>-- | 1,2, 8 |
| | FR – A1 – 2 341 106 (PERROT)<br>* Fig. 1, Position B *<br><br>-- | 1 |
| | DE – A1 – 2 745 138 (KABEL- UND METALLWERKE GUTEHOFFNUNGSHÜTTE AG)<br>* Anspruch 5 *<br><br>-- | 4 |
| | EP – A2 – 0 000 543 ('PAN THERM GMBH)<br>* Seite 17, Zeilen 15 bis 19; Seite 7, Zeilen 20 bis 24 *<br><br>-- | 5,8 |
| | DE – U – 7 705 030 (PAN-THERM GMBH)<br>* Seite 8, Absatz 2; Fig. 3 *<br><br>-- | 5,7 |
| | US – A – 4 089 145 (DEVRIES et al.)<br>* Spalte 3, Zeile 57 bis Spalte 4, Zeile 53 *<br><br>-- <br>./.. | 5 |

**KLASSIFIKATION DER ANMELDUNG (Int. Cl.³)**

F 24 J 3/02

**RECHERCHIERTE SACHGEBIETE (Int. Cl.³)**

E 04 C 2/00

E 04 D 3/00

F 24 J 3/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patent-familie, übereinstimmendes Dokument

Der vorliegende Recherchenbericht wurde für alle Patentansprüche erstellt.

| Recherchenort<br>Berlin | Abschlußdatum der Recherche<br>16-01-1981 | Prüfer<br>PIEPER |
|---|---|---|

EPA form 1503.1 06.78

**Europäisches Patentamt**

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A1 - 2 732 758 (KABEL- UND METALLWERKE GUTEHOFFNUNGSHÜTTE AG) <br> * Anspruch 3 * <br><br> -- <br><br> DE - A1 - 2 724 035 (BOETTCHER) <br> * Seite 3, Absatz 2 * <br><br> ---- | 5 <br><br><br><br><br> 6 |

**KLASSIFIKATION DER ANMELDUNG (Int. Cl.³)**

**RECHERCHIERTE SACHGEBIETE (Int. Cl.³)**

EPA Form 1503.2   06.78